# EUROPEAN PATENT APPLICATION

(11) **EP 2 412 646 A1**
(43) Date of publication of application: **01.02.2012**
(21) Application number: 10171012.7
(22) Date of filing: 28.07.2010
(51) Int. Cl.: B65D 85/804

(54) **A capsule for food preparation**

(71) Applicant: Nestec S.A., 1800 Vevey (CH)
(72) Inventor: Dogan, Nihan, 1090, La Croix-sur-Lutry (CH); Doleac, Frédéric, 25160, Vaux et Chantegrue (FR); Palthey, Jean-Bernard, 1066, Epalinges (CH); Raederer, Marc, 1054, Morrens (CH)

(57) **Abstract**

The present invention is directed to a capsule (1) for use with a food preparation machine, comprising rigid side walls (2) with peripheral upper edges (3), a top wall (4) extending from said upper edges, and a bottom wall (5), said walls defining a chamber (6) that contains an ingredient, said capsule being adapted for receiving a fluid injected through a needle (7) extending from a needle plate (8) of the machine, said needle plate being adapted to rest onto the upper edges when said capsule is adapted in a functional position into said machine, said fluid and said ingredient being mixed for the preparation of a food product, characterized in that said capsule comprises sealing means (9) disposed on said peripheral upper edges so that said means realize a liquid-tight seal between said capsule and said needle plate, at least at the time said capsule is adapted in a functional position into said food preparation machine.

## Description

### Field of the invention

The present invention concerns a capsule for the preparation of a food substance with a food preparation machine. In particular, the invention relates to the preparation of hot or cold beverages from capsules containing one or more food-grade ingredients.

### Background of the invention

Many systems are available for preparing beverages - as well as soups, liquid or semi-liquid desserts, soft ice-cream, but also infant nutrition food for instance - from capsules. The manner of inserting the capsule into the machine preferably has to be quite direct, without complications and permit the easy removal of the capsule after use.

Some food preparation systems comprise means for supporting the capsule which are integrated in the machine. Said systems are however generally ill-suited for multi-beverage use due to the frequent contact of the beverage with the means for supporting the capsule. This poses, therefore, problems of cross contamination and hygiene problems, in particular, with some ingredients such as milk.

Other systems exist which comprise a capsule holder which is removable, i.e. detachable from the remainder of the machine, in order to resolve the above mentioned cross-contamination problems. A further advantage is to be able to dispose of the capsule more easily, in particular, when said capsule remains full of liquid after removal. The storage in the machine of capsules still containing liquid is avoided. This also facilitates the replacement of the capsule and thus enables easier rinsing or cleaning of the capsule holder, for example, in the dishwasher.

In any case, the machine comprises injection means for injecting an extraction and/or dissolution fluid inside the capsule, which fluid interacts with the capsule contents to allow preparation of a food product, which is then expelled from the capsule through a dispensing opening, for instance into a cup or similar receiving container, ready for consumption.

The injection means comprise an injection plate which contacts the upper edges of the capsule when said capsule is placed inside the machine in a functional configuration for preparation of a beverage. The injection plate comprises at least one needle that protrudes downwardly into the capsule chamber when said capsule is in a functional position into the machine, to create at least one corresponding jet of fluid inside the capsule. Alternatively - or sometimes also in combination with the needle system - the injection plate can comprise a series of fluid injection holes pierced through the said plate, which create a series of spray-like jets inside the capsule, in a "shower" injection configuration. In all cases, the fluid is injected by the machine under pressure into the capsule chamber. Due to the high pressure, it is particularly crucial to prevent leakage in the region of the interface between the capsule, the injection plate, and capsule holder if one is present.

European patent EP 1 967 099 B1 discloses a system wherein the injection plate is provided with clamping and sealing means for realizing a sealing in the vicinity of the injection point, and also a sealing on the capsule surroundings so that no fluid can leak out in the portion where the capsule is held between the capsule holder and the injection plate.

The sealing efficiency of the sealing system described therein is however dependent on the cooperation of two sealing configurations: one sealing is performed locally around the injection point, and this first local sealing is reinforced by a clamping force applied on the capsule peripheral edges which are literally "pinched" between the capsule holder and the injection plate.

Recently, machines were developed that can accommodate capsules of various types, and especially capsules that were initially designed to be used in cooperation with another type of machine. Particular differences are noted in the design of the injection means. These differences, although capsules adaptors can be used to accommodate one type of capsule in another type of machine, can lead to safety issues and particularly leakage risks in case the machine injection means do not fit properly the capsule outer shape and size. This risk is of course reinforced if the machine provides a higher pressure for the fluid injection.

There is a need for a capsule that can accommodate various types of machines, and fit properly and safely into various types of capsule receptacles, independent from the fact that the capsule should be preliminarily placed in a capsule holder or not, and whether the said capsule holder is detachable or not from the machine.

### Summary of the invention

The present invention provides a solution to the need mentioned above, with a capsule for use with a food preparation machine, said capsule comprising rigid side walls with peripheral upper edges, a top wall extending from said upper edges, and a bottom wall, said walls defining a chamber that contains at least one soluble and/or extractable ingredient, said capsule being adapted for receiving an extraction fluid injected through an injection needle extending downwardly from a needle plate of the machine, said needle plate being adapted to rest onto the upper edges when said capsule is adapted in a functional position into said food preparation machine, said fluid and said ingredient being mixed into the chamber for the preparation of a food product, characterized in that said capsule further comprises sealing means disposed at least on said peripheral upper edges so that said means realize a liquid-tight seal between said capsule and said needle plate, at least at the time said capsule is adapted in a functional position into said food preparation machine.

In a highly preferred embodiment of the present invention, said sealing means is disposed along the entire periphery of said peripheral upper edges.

In one first possibility, the sealing means protrudes upwardly at least partially above the plan containing said peripheral upper edges.

In a second possibility, alternatively or in combination with the first possibility mentioned above, the sealing means can comprise a rubber-like O-ring seal. Advantageously, said O-ring seal can be integrally co-injection moulded together with said capsule side walls and upper edges.

In a third possibility, alternatively or in combination with the first and second possibilities mentioned above, the sealing means can comprise a channel running along the entire surface of said peripheral upper edges.

In a fourth possibility, alternatively or in combination with the first, second and/or third possibilities mentioned above, the sealing means can comprise a coating made of a flexible material, said coating being disposed as a continuous band along the whole periphery of said edges.

In an advantageous embodiment of the present invention, said top wall is a membrane pierceable by the injection needle, which is disposed in alignment with said peripheral upper edges.

However, said top wall can be alternatively disposed, at least partially, along a lower plan compared to the plan containing the peripheral upper edges of the capsule, thus defining a closed headspace in between said top wall and the lower surface of the machine's needle plate, said headspace being of a sufficient height to accommodate the injection needle without piercing the capsule top wall, when said capsule is adapted in a functional position into said food preparation machine.

Concerning the capsule top wall, it can comprise a single opening for creating a jet of extraction fluid into the capsule chamber when fluid is injected through the injection needle into the headspace between the capsule and the needle plate, or alternatively, it can comprise a plurality of openings for creating a spray of extraction fluid into the capsule chamber.

In a second aspect, the present invention concerns a system for preparing a food product, said system comprising:
(i) A food preparation machine, adapted to accommodate a capsule containing at least one ingredient, said machine comprising supply means for supplying an extraction fluid to the capsule, optionally heating means for heating said extraction fluid prior to supply to the capsule, and injection means for injecting said fluid into said capsule, said injection means comprising at least one needle carried by a needle plate,
(ii) A capsule comprising rigid side walls with peripheral upper edges, a top wall extending from said upper edges, and a bottom wall, said walls defining a chamber that contains at least one soluble and/or extractable ingredient, said capsule being adapted for receiving an extraction fluid injected through an injection needle extending downwardly from a needle plate of the machine, said needle plate being adapted to rest onto the upper edges when said capsule is adapted in a functional position into said food preparation machine,
characterized in that said capsule further comprises sealing means disposed on said peripheral upper edges so that said means realize a liquid-tight seal between said capsule and said needle plate, at least at the time said capsule is adapted in a functional position into said food preparation machine.

The sealing means is preferably disposed along the entire periphery of said peripheral upper edges. It preferably protrudes upwardly at least partially above the plan containing said peripheral upper edges.

The said sealing means can comprise a rubber-like O-ring seal that is preferably integrally co-injection moulded together with said capsule side walls and upper edges. Alternatively, or in addition, the said sealing means can comprise a channel running along the entire surface of said peripheral upper edges, and/or it can comprise a coating made of a flexible material, said coating being disposed as a continuous band along the whole periphery of said edges.

The capsule top wall can be a membrane pierceable by the injection needle, which is disposed in alignment with said peripheral upper edges, or alternatively, it can be disposed, at least partially, along a lower plan compared to the plan containing the peripheral upper edges of the capsule, thus defining a closed headspace in between said top wall and the lower surface of the machine's needle plate, said headspace being of a sufficient height to accommodate the injection needle without piercing the capsule top wall, when said capsule is adapted in a functional position into said food preparation machine.

In a first embodiment of the system according to the invention, the capsule top wall comprises a single opening for creating a jet of extraction fluid into the capsule chamber when fluid is injected through the injection needle into the headspace between the capsule and the needle plate.

In a second embodiment of the system according to the invention, the capsule top wall comprises a plurality of openings for creating a spray of extraction fluid into the capsule chamber when fluid is injected through the injection needle into the headspace between the capsule and the needle plate.

### Brief description of the drawings

Additional features and advantages of the present invention are described in, and will be apparent from, the description of the presently preferred embodiments which are set out below with reference to the drawings in which:
**Figure 1** is a schematic perspective cut view of a first embodiment of the invention;
**Figure 2** is a schematic profile cut view similar to figure 1;
**Figure 3** is a schematic perspective cut view of a second embodiment of the invention;
**Figure 4** is a schematic profile cut view similar to figure 3;
**Figure 5** is a schematic perspective cut view of a third embodiment of the invention;
**Figure 6** is a schematic perspective cut view of a fourth embodiment of a capsule top wall according to the invention.

### Detailed description of the invention

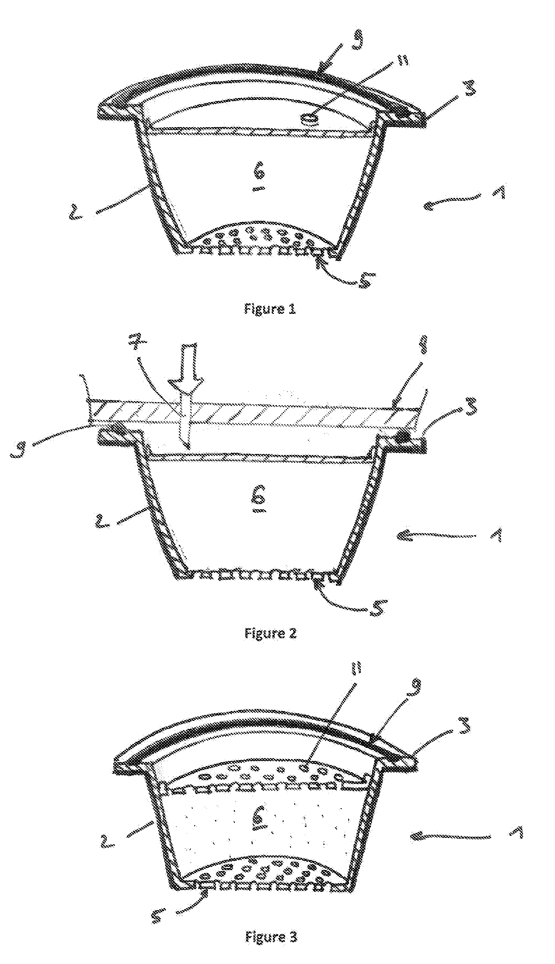

In **figure 1** and **figure 2** is illustrated a first embodiment of a capsule 1 according to the invention.

The capsule 1 comprises rigid side walls 2 with peripheral upper edges 3, a top wall 4 extending from said upper edges 3, and a bottom wall 5. The said walls define a chamber 6 that contains at least one soluble and/or extractable ingredient (not illustrated in the drawing).

The capsule 1 is adapted for receiving an extraction fluid injected through an injection needle 7, as illustrated in **figure 2**, extending downwardly from a needle plate 8 of the machine - the machine is not illustrated in the drawing -.

The bottom wall 5 is rigid and comprises a plurality of dispensing openings for dispensing of the product prepared inside the capsule into a container like a cup for instance (not shown in the drawing). The top wall 4 comprises one single inlet opening for the fluid provided by the machine through the needle to flow through towards the capsule chamber 6.

The needle plate 8 is adapted to rest onto the upper edges 3 when said capsule is adapted in a functional position into the food preparation machine. The fluid and the ingredient contained in the chamber 6 are mixed into said chamber for the preparation of a food product.

According to the invention, the capsule 1 further comprises sealing means disposed on the peripheral upper edges 3, such that the said means realize a liquid-tight seal between the capsule 1 and the needle plate 8, at least at the time the capsule is adapted in a functional position into the food preparation machine.

As shown in **figure 2**, the sealing means protrudes upwardly at least partially above the plan containing said peripheral upper edges 3. The sealing means comprises a rubber-like O-ring seal 9, which is integrally co-injection molded together with the capsule side walls 2 and upper edges 3. The O-ring seal 9 runs along the entire periphery of the upper edges 3, at the upper surface of said edges 3.

The top wall 4 is disposed, at least partially, along a lower plan compared to the plan containing the peripheral upper edges 3 of the capsule, thus defining a closed headspace 10 in between said top wall 4 and the lower surface of the machine's needle plate 8. The said headspace is of a sufficient height to accommodate the injection needle - as illustrated in **figure 2** - without piercing the capsule top wall, when said capsule is adapted in a functional position into said food preparation machine.

The capsule illustrated in **figures 1 and 2** is packed during storage and until its use by a consumer, into a secondary packaging such as a flow-wrap film made of light, moisture, and gas barrier material. This guarantees the freshness of the ingredient contained therein, since the capsule's top and bottom walls are open.

The top wall is preferably made of the same material as the rest of the capsule body. It is manufactured as an independent element which is then assembled onto the inner surface of the capsule's side walls, by heat or ultrasonic sealing, or any other suitable assembling process. The capsule body is made as a single element by injection-molding of a thermoplastic material such as for example polyethylene (PE), polypropylene (PP), polystyrene (PS), or a combination thereof. The capsule side and bottom walls can also be manufactured by thermoforming a sheet of thermoplastic material.

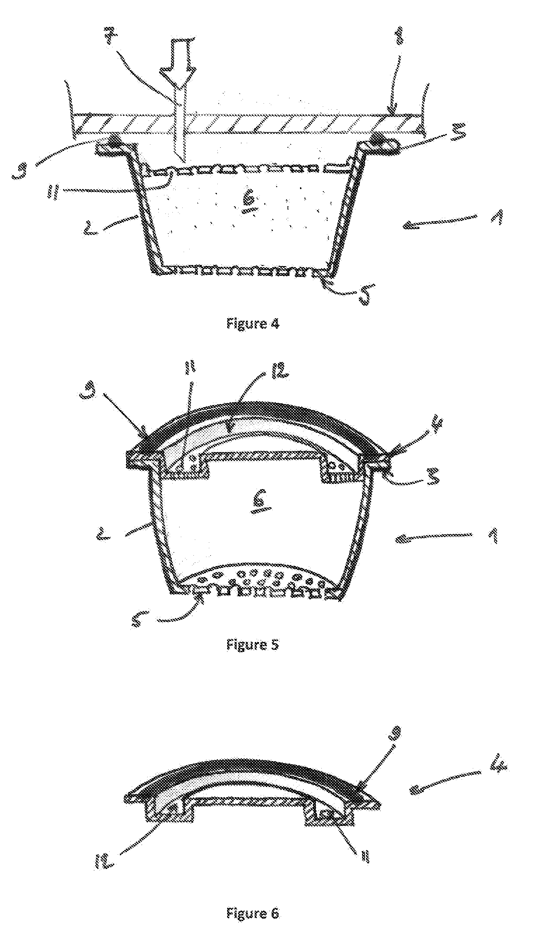

In **figures 3** **and** **4** is shown an alternative embodiment of the invention described above in reference to **figures 1 and 2**. In this alternative embodiment the top wall 4 of the capsule is disposed in a lower plan compared to the plan containing the peripheral upper edges 3 of the capsule.

As shown in **figure 4**, this construction defines a headspace 10 in between said top wall and the lower surface of the machine's needle plate 8, said headspace 10 being of a sufficient height to accommodate the injection needle 7 without piercing the capsule top wall, when said capsule is adapted in a functional position into said food preparation machine.

The top wall 4 comprises a plurality of openings 11 for creating a spray of extraction fluid into the capsule chamber when fluid is injected through the injection needle into the headspace 10 between the capsule 1 and the needle plate 8.

As described for the first embodiment hereinabove, the capsule 1 comprises sealing means disposed on the peripheral upper edges 3, such that the said means realize a liquid-tight seal between the capsule 1 and the needle plate 8, when the capsule is adapted in a functional position into the food preparation machine.

As shown in **figure 4**, the sealing means protrudes upwardly at least partially above the plan containing said peripheral upper edges 3. The sealing means comprises a rubber-like O-ring seal 9, which is integrally co-injection molded together with the capsule side walls 2 and upper edges 3. The O-ring seal 9 runs along the entire periphery of the upper edges 3, at the upper surface of said edges 3.

**Figure 5** illustrates yet another embodiment of the invention, wherein the capsule structure is very close to the preceding embodiment described in reference to figures 3 and 4. The difference here is that the capsule top wall 4 is disposed onto the upper edges 3 of the capsule, and sealed thereonto.

Said top wall 4 comprises a circumferential groove 12 with a groove bottom side which comprises multiple openings 11 for creating a spray of extraction fluid into the capsule chamber when fluid is injected through the injection needle into the headspace 10 between the capsule 1 and the needle plate 8.

The depth of the groove 12 is sufficient to accommodate the needle of the machine without piercing through the said top wall. The fact that the groove 12 is circumferential is particularly beneficial as it does not require the user to orientate the capsule specifically to accommodate the needle: whatever the rotational position of the capsule relative to the needle, the said needle can be accommodated, while ensuring a proper leaktight arrangement between the capsule and the machine, when the said capsule is in functional position within said machine.

**Figure 6** shows a variant of the top wall 4 of a capsule as described above with reference to figure 5. In this case, the circumferential groove 12 does not comprise a plurality of inlet openings for the injection fluid to be introduced inside the capsule chamber, but as can be seen in the figure, the groove 12 of capsule top wall 4 comprises one single inlet opening 11, to create a single jet of fluid inside the capsule chamber.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A capsule (1) for use with a food preparation machine, said capsule comprising rigid side walls (2) with peripheral upper edges (3), a top wall (4) extending from said upper edges, and a bottom wall (5), said walls (2, 3, 4, 5) defining a chamber (6) that contains at least one soluble and/or extractable ingredient, said capsule being adapted for receiving an extraction fluid injected through an injection needle (7) extending downwardly from a needle plate (8) of the machine, said needle plate (8) being adapted to rest onto the upper edges (3) when said capsule (1) is adapted in a functional position into said food preparation machine, said fluid and said ingredient being mixed into the chamber (6) for the preparation of a food product, **characterized in that** said capsule (1) further comprises sealing means (9) disposed at least onto said peripheral upper edges (3) so that said means realize a liquid-tight seal between said capsule (1) and said needle plate (8), at least at the time said capsule is adapted in a functional position into said food preparation machine.

2. A capsule (1) according to claim 1, wherein said sealing means (9) is disposed along the entire periphery of said peripheral upper edges (3).

3. A capsule (1) according to claims 1 or 2, wherein said sealing means (9) protrudes upwardly at least partially above the plan containing said peripheral upper edges (3).

4. A capsule (1) according to any of the preceding claims 1, 2 or 3, wherein said sealing means comprises a rubber-like O-ring seal (9).

5. A capsule (1) according to claim 4, wherein said O-ring seal (9) is integrally co-injection molded together with said capsule side walls (2) and upper edges (3).

6. A capsule (1) according to any of the preceding claims 1 to 5, wherein said sealing means (9) comprises a channel running along the entire surface of said peripheral upper edges (3).

7. A capsule (1) according to any of the preceding claims 1 to 6, wherein said sealing means (9) comprises a coating made of a flexible material, said coating being disposed as a continuous band along the whole periphery of said edges (3).

8. A capsule (1) according to any of the preceding claims 1 to 7, wherein said top wall (4) is a membrane pierceable by the injection needle (7), which is disposed in alignment with said peripheral upper edges (3).

9. A capsule (1) according to any of the preceding claims 1 to 7, wherein said top wall (4) is disposed, at least partially, along a lower plan compared to the plan containing the peripheral upper edges (3) of the capsule, thus defining a closed headspace (10) in between said top wall (4) and the lower surface of the machine's needle plate (8), said headspace (10) being of a sufficient height to accommodate the injection needle (7) without piercing the capsule top wall, when said capsule is adapted in a functional position into said food preparation machine.

10. A capsule (1) according to claim 9, wherein said top wall (4) comprises a single opening (11) for creating a jet of extraction fluid into the capsule chamber (6) when fluid is injected through the injection needle (7) into the headspace (10) between the capsule (1) and the needle plate (8).

11. A capsule (1) according to claim 9, wherein said top wall (4) comprises a plurality of openings (11) for creating a spray of extraction fluid into the capsule chamber (6) when fluid is injected through the injection needle (7) into the headspace (10) between the capsule (1) and the needle plate (8).

12. A system for preparing a food product, said system comprising:
(i) A food preparation machine, adapted to accommodate a capsule containing at least one ingredient, said machine comprising supply means for supplying an extraction fluid to the capsule, optionally heating means for heating said extraction fluid prior to supply to the capsule, and injection means for injecting said fluid into said capsule, said injection means comprising at least one needle carried by a needle plate,
(ii) A capsule comprising rigid side walls with peripheral upper edges, a top wall extending from said upper edges, and a bottom wall, said walls defining a chamber that contains at least one soluble and/or extractable ingredient, said capsule being adapted for receiving an extraction fluid injected through an injection needle extending downwardly from a needle plate of the machine, said needle plate being adapted to rest onto the upper edges when said capsule is adapted in a functional position into said food preparation machine,
**characterized in that** said capsule further comprises sealing means disposed on said peripheral upper edges so that said means realize a liquid-tight seal between said capsule and said needle plate, at least at the time said capsule is adapted in a functional position into said food preparation machine.

13. A system according to claim 12, wherein said sealing means is disposed along the entire periphery of said peripheral upper edges.

14. A system according to claims 12 or 13, wherein said sealing means protrudes upwardly at least partially above the plan containing said peripheral upper edges.

15. A system according to any of the preceding claims 12, 13 or 14, wherein said sealing means comprises a rubber-like O-ring seal.

16. A system according to claim 15, wherein said O-ring seal is integrally co-injection molded together with said capsule side walls and upper edges.

17. A system according to any of the preceding claims 12 to 16, wherein said sealing means comprises a channel running along the entire surface of said peripheral upper edges.

18. A system according to any of the preceding claims 12 to 17, wherein said sealing means comprises a coating made of a flexible material, said coating being disposed as a continuous band along the whole periphery of said edges.
